# EUROPEAN PATENT SPECIFICATION

(11) **EP 1 936 502 B1**
(45) Date of publication and mention of the grant of the patent: **16.06.2010**
(21) Application number: 06126461.0
(22) Date of filing: 19.12.2006
(51) Int. Cl.: G06F 11/20

(54) **A method for ensuring backup function to an electrical system in a vehicle and an electrical system as such**
Verfahren zur Gewährleistung der Sicherungsfunktion eines elektrischen Systems bei einem Fahrzeug und derartiges elektrisches System
Procédé permettant de garantir la fonction de sauvegarde d'un système électrique pour un véhicule, et système électrique correspondant

(43) Date of publication of application: 25.06.2008
(73) Proprietor: SAAB AB, 581 88 Linköping (SE)
(72) Inventor: Jansson, Tomas, SE-61633, ÅBY (SE); Holmlund, Lars, SE-58731, LINKÖPING (SE)
(74) Representative: Herbjörnsen, Rut

(56) References cited:
- EP-A1- 0 760 503
- GB-A- 2 410 573
- US-A- 4 590 554

## Description

### Field of the invention

The present invention relates to a method for ensuring backup function to an electrical system and an electrical system for a vehicle. Specifically, the present invention relates to a redundant electrical system with a backup function in accordance with the preamble of the appended independent claims 1 and 9.

### Background of the invention

In the field of avionics, it has always been of high priority and great interest to focus on the reliability of electrical systems. It is, of course, of great importance that each system is reliable in an aerial vehicle in order to have the flight function properly. Generally, the reliability has been solved by providing backup systems to main systems, whereas the backup system takes over the control when a main system is set out of function. In some of the electrical systems of an aerial vehicle, such as flight control systems and the like, it is important that no delay is introduced during the handover, in such systems the backup system is generally running in parallel with the main system. This means that the backup system is substantially a replica of the main system, in hardware as well as in software, and that the backup system must update the parameters of the system in the same manner as the main system, rendering high costs due to the duplication of hardware and the like. The reliability is, hence, a parameter that is under continuous development in order to solve the problem and keep the costs to a minimum. One should understand that the cost of duplication of hardware and the like is very high and is something that should be avoided, if possible, during new constructions as well as development of existing systems.

In today's system, the reliability is solved either by providing very highly reliable components or with redundant hardware, as stated above, and the duplication of functionality with different programs. The redundant systems not only generate high costs, but also introduce a factor that affects the failure rate negatively, as one actually introduces new components that also can fail. Also, it is very costly to create specially adapted applications software solutions in which each application software program is adapted with routines and procedures that monitor other application software. It is therefore a desire of the avionic industry to provide high reliability of functions of the system to low costs and low volume, in order to avoid filling up the interior of the plane with backup equipment. It is further a desire to provide reliability functions to a system that generate a low increase of weight in order to keep the fuel consumption as low as possible, less payload generates less total weight, which results in that the plane consumes less fuel, and that the stress on the body of the plane is reduced.

It is known to switch between a hardware unit to another hardware unit in an electrical system when a hardware unit fails in order to receive a high reliability of the system. Document GB-patent 2,410,573 relates to a redundant system wherein two similar application stations switch information; the status of the first application is transferred to the second application at regular intervals, in order to handover the control to the second application when the first application fails. The constantly backup running application station comprises hardware and software that increase the costs, weight, and volume, in order to be introduced into an electrical system of a vehicle.

EP0760503 shows a fault tolerant multiple network server system in which multiple servers concurrently act as back-up servers for each other even while they are providing their own server services to the system.

US 4 590 554 describes a parallel computer system which has a primary task processor, a second primary task processor and a secondary task processor acting as a backup for the second primary task processor.

In view of the foregoing, it is an object to provide a redundant electrical system, which does not affect the costs, weight and volume as much as conventional systems.

### Summary of the invention

In order to achieve said object of the invention a system and a method according to the appended independent claims 1 and 9 are provided.

The present invention discloses an electrical system for a vehicle comprising a digital information carrier for digital data transfer; a first computing device (1) arranged to execute a first application software installed on the first computing device; and a second computing device arranged to execute a second application software, different from said first application software, installed on the second computing device. The second computing device further comprises a backup application software installed on the second computing device, identical to the first application software, wherein the second computing device is configured to initiate an execution of the installed backup application software when an error occurs in the first computing device in parallel with the execution of the second application software. The first application software, the second application software and backup application software are arranged to be executed in separated memory parts.

The electrical system may further include the second computing device comprises a first master schedule, wherein the first master schedule is arranged to execute the second application on the second computing device; and a second master schedule, wherein the second master schedule is arranged to execute the second application and the backup application.

Furthermore, the electrical system according to the invention include a feature, wherein the second computing device is arranged to run the first master schedule when the electrical system is running in a normal mode, i.e. when the first application software is running properly in the first computing device, and the second computing device is arranged to run the second master schedule when the electrical system is running in a backup mode, i.e. when the first application software has failed in the system.

In addition, the electrical system may further disclose that the second computing device is configured to activate a reschedule process on an operating system of the second computing device, arranged to switch from the first master schedule to the second master schedule when an error in the first computing device is detected.

The electrical system according to the invention may further disclose that the second computing device is arranged with a monitoring function configured to activate the rescheduling process in the second computing device.

The invention may further comprise a second computing device that is arranged with a monitoring function to monitor at least the first computing device.

The invention further relates to an electrical system wherein the first computing device continuously is sending out the running condition of the first application software, and wherein the monitoring function is configured to monitor data sent on the data bus, and when an expected running condition from the first computing device is not detected on the system bus the monitoring function is configured to instruct the second computing device to initiate the execution of the third application software.

Additionally, the electrical system according to the present invention may be a non-critical system being non sensitive to delays.

The invention further discloses a method for ensuring backup function to an electrical system in a vehicle comprising a digital information carrier for digital data transfer; a first computing device arranged to execute a first application software installed on the first computing device and a second computing device arranged to execute a second application software installed on the second computing device, different from said first application software, and a third backup application software, identical to the first application software. The method comprises the steps of: determining that an error has occurred in the first computing device; and initiating an execution of the backup application in a first memory part of the second computing device in parallel while continuously executing the second application software in a second memory part separated from the first memory part.

The initiating process of the method may further comprise the step of switching from an original master schedule running in the second computing device to a second master schedule.

The method may further comprise the step of monitoring the digital information carrier by using a monitoring function running on the second computing device, said monitoring function performs said determining step as well.

Further, the invention discloses a method wherein the monitoring function may further monitor the running conditions of the first application software sent on the digital information from the first computing device.

The method according to the present invention may further disclose an embodiment wherein the monitoring function further determines that an error has occurred in the first computing device when no running condition of the first application software is monitored on the digital information carrier.

The method may further comprise, after said initiating step, the steps of: determining that the first application software is up and running on the first computing device; and switching back to the original running state realising the first application into the process when it is determined that the first application software is up and running again on the first computing device.

By using already existing hardware structures and utilising the surplus of the capacity that exists in the existing hardware one can omit the introduction of duplicated hardware. The present invention is especially well suited for non delay critical electrical systems, such as communications systems, counter-measure systems, navigation systems, internal communication systems, presentation systems and the like, wherein a minor delay in upholding function is accepted when failure occurs. In these systems the costs of introducing duplication of hardware is immensely high, whereas reliability may in fact get down-prioritised in these systems, resulting in lack of a backup function.

The present invention results in an increased reliability achieved with a minimum of increased costs and no increased volume or weight.

### Brief description of the drawings

The invention, together with further objectives and advantages thereof, may best be understood by reference to the following description taken in conjunction with the accompanying drawings in which:
FIGs. 1A-1B illustrate a schematic overview of a process of an embodiment of the present invention;
FIGs. 2A-2B illustrate a similar overview of a process of a different embodiment of the present invention;
FIG. 3 shows a schematic flowchart of switching to a backup function according to an embodiment of the present invention;
FIGs. 4A-4B illustrate a process of an embodiment of the present invention in each computing device; and
FIG. 5 illustrates a process of an embodiment of the present invention when a reboot is successfully performed.

### Detailed description of embodiments of the invention

Embodiments of the present invention will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

The present invention is described below with reference to block diagrams and/or flowchart illustrations of methods and/or apparatus (systems) according to embodiments of the invention. It is understood that several blocks of the block diagrams and/or flowchart illustrations, and combinations of blocks in the block diagrams and/or flowchart illustrations, can be implemented by computer program instructions. These computer program instructions may be provided to a processor of a general purpose computer, special purpose computer, and/or other programmable data processing apparatus to produce a machine, such that the instructions, which execute via the processor of the computer and/or other programmable data processing apparatus, create means for implementing the functions/acts specified in the block diagrams and/or flowchart block or blocks.

These computer program instructions may also be stored in a computer-readable memory that can direct a computer or other programmable data processing apparatus to function in a particular manner, such that the instructions stored in the computer-readable memory produce an article of manufacture including instructions which implement the function/act specified in the block diagrams and/or flowchart block or blocks.

The computer program instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions/acts specified in the block diagrams and/or flowchart block or blocks.

The technical development of avionic systems has led to an increasing use of standardised computer devices in which different types of functions are realised as application software. The computer devices communicate with each other over data links, e.g. wireline or wireless data busses. In the following, a process of how to accomplish an improved reliability in an avionic system without adding extra hardware and software will be described. The solution utilizes the capacity, e.g. processing and memory and the like, of an already existing computer device. In avionic systems it is important to completely isolate portions of a system from each other, e.g. the cockpit control system must be predictable and known at all times. This is achieved by using a partitioning operating system. A partitioning operating system divides memory and CPU time among statically allocated partitions in a fixed manner, so that each hard partition has a certain amount of memory and CPU time allocated to it, which can neither be increased nor decreased.

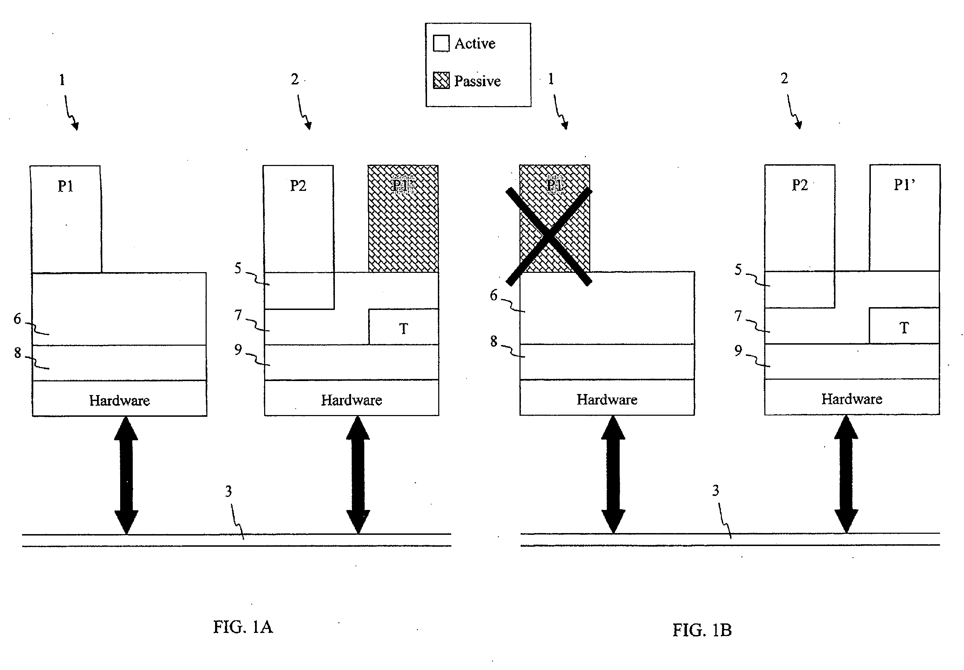

FIG. 1A and FIG. 1B schematically illustrates a process of taking over the function of an application software in case the main application fails according to an embodiment of the present invention. In the illustrated example, a first computing device 1 and a second computing device 2 are connected to a data bus 3. The data bus 3 may be a LAN working with Ethernet protocols or the like but might as well be a wireless communication link. A first application software P1 is placed on the first computing device 1 and a backup, denoted as P1', is stored in the second computing device 2. The first application software P1 is in FIG. 1A active, i.e. up and running, whereas the first application software P1' on the second computing device is passive, i.e. down in an "off"-state.

On the second computer a second application software P2, different from the first application software P1, is placed. As an example, the first application software P1 may be an application that presents flight data such as air speed that is currently used, and the second application software may be an application that presents a video feed from an external camera, such as a landing gear camera. In the second computing device 2 a monitoring function 5 has been installed on a partitioned operating system 7 (OS) of the second computing device 2 and the monitoring function monitors all the other computing devices, in the figure the first computing device 1, e.g. monitoring function 5 may monitor all data on the bus 3 that is coming from the first application software P1 via a partitioning operating system 6 of the first computing device. The monitoring function will be described in more detail below. When the monitoring function 5 of the second computing device 2 detects an error in the first computing device 1, indicating that the first application P1 is not working, the partitioning operating system 7 of the second computing device 2 starts an alternative execution scheme. It should here be noted that in the illustrated embodiment a partitioning operating system is used, however, in a different setting the operating system may be a different operating system such as a process operating system or the like. However, the partitioned system that divides memory and CPU time among statically allocated partitions in a fixed manner is preferred in order to achieve a safe reliability margin for the system.

In each of the illustrated partitioning systems a BSP, board support package, 8,9 is shown. The BSP 8,9 contains routines for initializing and controlling hardware in the target system. The BSP is able to process multiple applications simultaneously and its primary responsibilities are:
- interfacing with boot and shutdown software,
- establishing a virtual address map for onboard I/O,
- interfacing with an interrupt controller,
- providing default handlers for error-signaling interrupts,
- interfacing with a PCI controller, and,
- interfacing with a system time (tick timer),

It should further be understood that the computing devices comprise additional hardware denoted as hardware in the figures.

The alternative execution scheme in the second computing device 2 includes the identical application software P1' as well as the application software P2 and is used in order to startup the identical application on the second computing device 2, to execute, in the example, the application that is presenting the air speed of the flight. Thereby, omitting the first application P1 running on the first computing device 1 from the executing process in the system. This rescheduling process, change of master schedule, is predefined in the second computing device 2. The first application software P1' running on the second computing device 2 is activated by this rescheduling process and the application software P1' takes over as the active partitioning application and the previously active application software P 1 is put, by the BSP, into a down state, as illustrated in FIG. 1B. It should here be understood that the BSP of the first computing device may reboot the application. If the first application software P1, after this reboot, functions properly, the second computing device 2 registers that the application is up and running again and changes back to its original execution scheme, resulting in that the first computing device is implemented back into the system again. In an alternative embodiment the system as such fails and the first computing device is thereby silent.

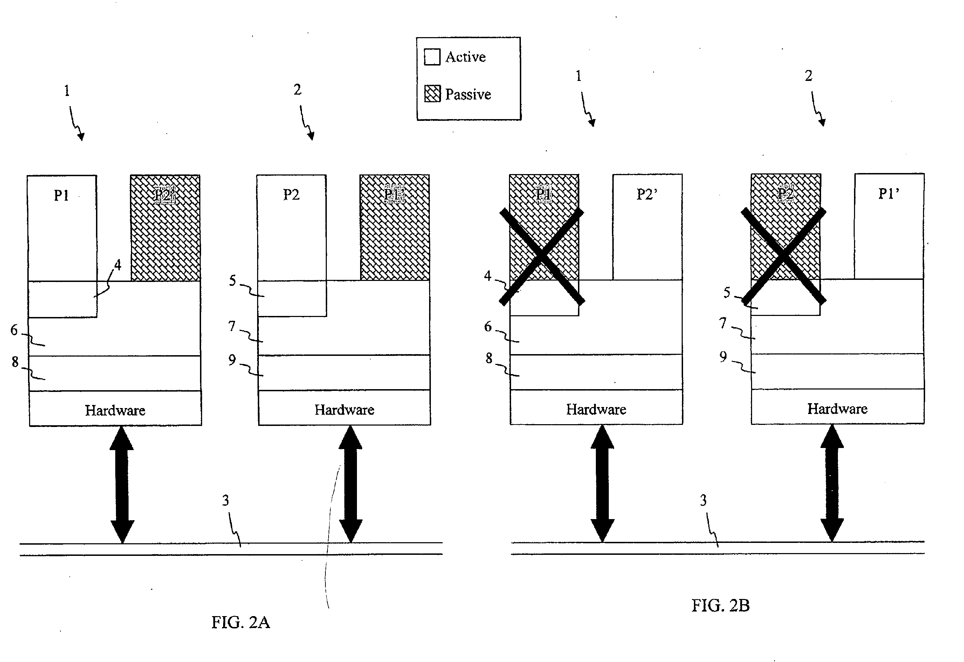

In FIG. 2A - 2B a similar process is illustrated. However, in FIG. 2A, 2B, the electrical system is expanded by introducing a backup application to the second application software P2, i.e. an identical application software P2' is introduced on the first computing device 1. In FIG. 2A, the first application software P1 is running in a normal mode on the first computing device 1 and the second application software P2 is running in a normal mode on the second computing device 2. In FIG 2B both the first application software P1 running on the first computing device 1 and the second application software P2 running on the second computing device 2 fail and the first application software P1' running on the second computing device 2 and the second application software P2' running on the first computing device 1 are activated into the system. This is done by predefined rescheduling processes, that is, running alternative master execution schemes on both the first computing device and the second computing device. As illustrated in FIG. 2A-2B, the first computing unit has a monitoring function 4 installed therein in order to detect that the second application software P2 has failed on the second computing device 2. The process illustrated in FIG. 2A and 2B is obviously only possible if the applications P1 and P2 crash internally of the computing device and not due to a hardware failure of the computing device. It should here be noted that the number of partitioning applications running on a computing device may be a lot higher than in the illustrated example. For example, on the second computing device many alternative application software programs, P1', P3', P4' and so on, may be installed. The number is only limited by the processor and memory capacity of the second computing device. By installing the same application twice, i.e. on two separate computing devices, a higher degree of reliability is achieved without needing to develop two different applications. Furthermore, the excess of capacity of memory and computing is used, which exists in that the computing devices that are today standardized and generally used, have large memory and computing capacities.

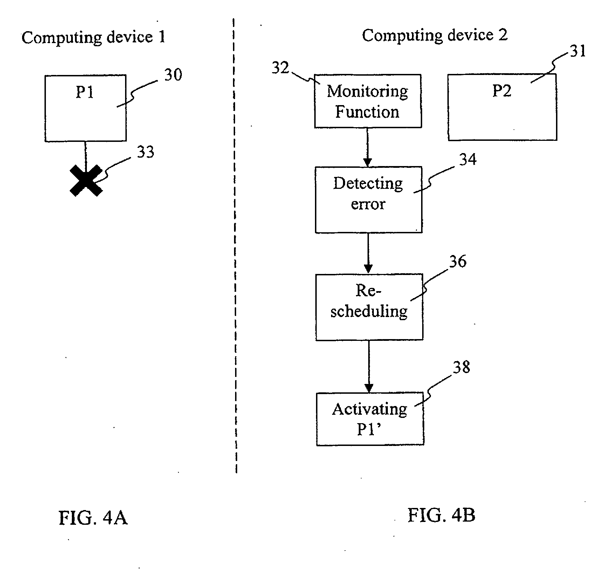

As stated above one embodiment of the present invention comprises a monitoring function 5, which will now be described with reference to FIG. 1A-1B and FIG. 4. The monitoring function 5 has only one task, which is to monitor the state conditions of other applications in other computing devices connected to the system bus 3. In order to define the number of master schedules, referred to above as execution schemes, in each computing device a table has been drafted, see table 1. As shown in table 1 the number of master schedules is based on the number of backup application installed on the computing device. The schematic table is illustrated below referring to the embodiment in FIGs. 1A-1B. In an example where a computing device comprises two backup applications (not shown) the table would disclose a computing device comprising four master schedules, a first master schedule (none backup applications), a second master schedule (first backup application), a third master schedule (second backup application), and a fourth master schedule (first and second backup applications). Each master schedule has an activation criterion defining when to switch master schedules in each computing device. The computing device changes the master schedule as soon as possible when the activation criterion is fulfilled/met. It should here be noted that the time for starting a change of a master schedule may be related to the backup application.

**Table 1**

| **Computing device** | **No of applications** | **Master schedule** |
|---|---|---|
| 1 | 1 | 1 |
| 2 | 2 | 2 |

Table 1 defines the first computing device and the second computing device in the left column. In the middle column it is defined that the first computing device has one application P1 installed and the second computing device has two applications P2, P1' installed. Finally, the right column defines that the first computing device runs in accordance with an original master schedule and the second computing device runs in a normal mode in accordance with a first master schedule but in the event of failure the second computing device has a second master schedule, that is. the second computing device has two master schedules as defined in the right column.

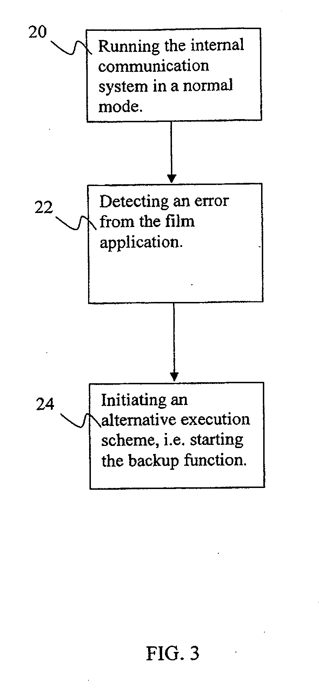

Referring to FIG. 3, a schematic overview of the process of running the backup function of an electrical system is shown. The electrical system is a non real time critical system, such as a communications system, an internal communications system, or the like. In the illustrated example the electrical system is an internal communications system.

In step 20, an application software program on a first computing device of the internal communications system is running in a normal mode, i.e. the system is working normally. In the illustrated example the application software is a video application software program for displaying a film onboard.

In step 22 the monitoring function of a second computing device detects an error in the application, such as an expected value of a running condition on a data bus between the two computing devices is not detected, or the like. It should here be understood that in an alternate embodiment of the invention the monitoring function may as well be on a higher level of the system, such as an overall monitoring function on a central control device. On the second computing device a second application software program is continuously running, being an internal communication application software program that enables communication between cockpit and other parts of the plane.

In step 24, the second computing device starts a rescheduling process that has been predetermined by an operator previously. The rescheduling process changes the execution scheme of application software in the second computing device, resulting in that the second computing device starts up the installed backup program of internal communication. The switch may result in a delay of the system by a small time period relating to the time it takes to start the backup application. This delay will look merely like a picture disturbance in the film. It should here be noted that the second application software program is continuously running during the rescheduling process.

An embodiment of the process of switching to a backup function in an exemplary system as shown in FIG. 1A is illustrated in FIG. 4A-4B., wherein FIG 4A shows the steps carried out in the first computing device 1 and FIG. 4B shows the steps carried out in the second computing device 2. A first application software P1 is installed in a memory of the first computing device 1 and a second application software P2 and a backup application software P1', which is identical to the first application software P1 of the first computing device 1, are installed in a memory of the second computing device 2. It should here be noted that the memory applications are separated according to a partitioning system, that is, the application software programs are not influenced by one another due to the fact that the application soft-ware programs are running in separated memory parts. Running conditions of the software applications are defined as follows:
CD1.P1.Start_Up - Application P1 is starting up, that is, the first computing device 1 is initiating the execution of application P1;
CD1.P1.Running_OK - Application P1 is running 1 satisfactorily in the first computing device;
CD2.P1'.Start_Up-Application P1' is starting up, that is, the second computing device 2 is initiating the execution of application P1';
CD2.P1'.Running_OK - Application P1' is running satisfactorily in the second computing device 2;
CD2.P2.Start_Up-Application P2 is starting up, that is, the second computing device 2 is initiating the execution of application P2; and
CD2.P2.Running_OK - Application P2 is running satisfactorily in the second computing device 2;

In step 30 in FIG. 4A the first computing device 1 is powered on and P1 starts running and broadcasts a start up running condition CD 1.P1.Start_Up out on the data bus 3, and as soon as the first application P 1 is up and running in a normal state condition the application P1 is broadcasting its running condition CD1.P1.Running_OK on the system bus 3. Since the first computing device is only configured with one active application and no passive backup application it has only one master schedule as stated above.

In step 31, the second computing device is powered on and the second computing device starts running according to an original master schedule 1 (see table 2 below, which discloses master schedules in the second computing device). That is, only the second application P2 is running in the second computing device. Similar to the first application P1 on the first computing device, the second application P2 broadcasts during start up the start up condition CD2.P2.Start_Up on the system bus 3. As soon as P2 is up and running in a normal mode the second application P2 broadcasts its running condition CD2.P2.Running_OK on the system bus 3.

In step 32, a monitoring function 5 of the second computing device 2 is monitoring the system bus 3 in order to detect when a master schedule switch criterion is fulfilled.

In step 33 of FIG. 4A, the first computing device 1 fails to execute because of, for example, hardware failure, loss of power, or the like, and the first computing device 1 stops broadcasting the running condition CD1.P1.Running_OK on the system bus.

In step 34 of FIG. 4B, the monitoring function 5 of the second computing device 2 detects a loss of the first computing device 1 or the application P I when it does not receive a running condition CD1.P1.Running_OK on the system bus. In step 36 the second computing device 2 activates a rescheduling process of the master schedule running on the second computing device 2 from the first master schedule M1 to the second master schedule M2. It should here be noted that the interval between broadcasting running conditions may vary from very frequent, for example, 100 times per second, to, for example, once a minute or the like. In order to detect that the running condition is lost the monitoring function knows when to expect a running condition of the first computing device 1 on the system bus 3 by predefined criteria in the table below.

The timing of the rescheduling is according to the rescheduling conditions as stated in table 2 below, denoted as T in FIG. 1A-1B, defined in the operating system of the second computing device 2. During the rescheduling process the second application P2 continues to broadcast the running condition CD2.P2.Running_OK on the system bus 3.

In step 38, the backup application P1' is activated and the operating system 7 is broadcasting the condition CD2.P1'.Start_Up. As soon as the application P1' is up and running the backup application starts broadcasting CD2.P1'.Running_OK. The monitoring function is monitoring the master schedule switch conditions within the computing device taking into account both boot up time and condition signals on the system bus, as seen in table 2.

**Table 2 Master schedule in second computing device 2**

| **Master schedule** | **Activation criteria** | **Reschedule conditions** | **Executed applications** |
|---|---|---|---|
| M1(normal) | Normal start | None | P2 |
| M2 | No CD1.P1.Running_OK-signal and X seconds after "Power On". | At the end of the ongoing master frame for P2 | P2 and P1' |
| M1 | M2 is active and CD 1.P 1.Start_Up-signal | At the end of the ongoing master frame for P2 | P2 |

Referring now to table 2, the activation criteria of activating the rescheduling process from master schedule 1, MS 1, to the master schedule 2, MS2, are that no expected running condition from the first computing device 1 is detected and that X seconds have passed since "power on". As stated above the first computing device sends out a start up condition, CD 1.P 1.Start_Up, on the data bus, and according to this embodiment of the invention the second computing device has an internal clock that monitors how many seconds have passed since the start up condition was monitored. This requirement is implemented in order to let the first computing device start up the first application P1 without having the second computing device 2 erroneously determining that the first application is down. This would result in that the system starts to flip back and forth the application between the two computing devices even though the first application is working.

If the monitoring function 5 has determined that the first application software P1 is down/has failed the monitoring function 5 activates the rescheduling process in the second computing device 2, resulting in that the master scheme 1 is switched to master scheme 2. However, when the switch will be made is determined according to the predetermined reschedule conditions, as seen in column titled "Reschedule conditions" in table 2. As seen in table 2 the switch, when determined that a switch should be performed, is initiated at the end of the master frame of P2, in order to avoid interruption in the execution of the second application software P2. By trying to avoid interruptions in the execution of application P2 one can avoid generation of erroneous data from the second application, or as in FIG.2, that the monitoring function 4 of the first computing device 1 determines that P2 has failed. It should here be noted that the switch may in another embodiment be made at the start of the execution of P2. The second application software is running uninterrupted on the second computing device when the switch of master schedule is performed. The operating system of the invention is able to change the execution scheme of the computing device and is able to broadcast the running condition of different applications at different frequencies. For instance, referring back to FIG. 1, the OS of the second computing device broadcasts four running conditions of the second application software program P2 per second and two running conditions of the backup application software program P1' per second, resulting in a sequence of running conditions broadcasted from the OS of the second computing device 2 is as follows: Run_P2, Run_P2, Run_P1', Run_P2, Run_P2, Run_P1'.

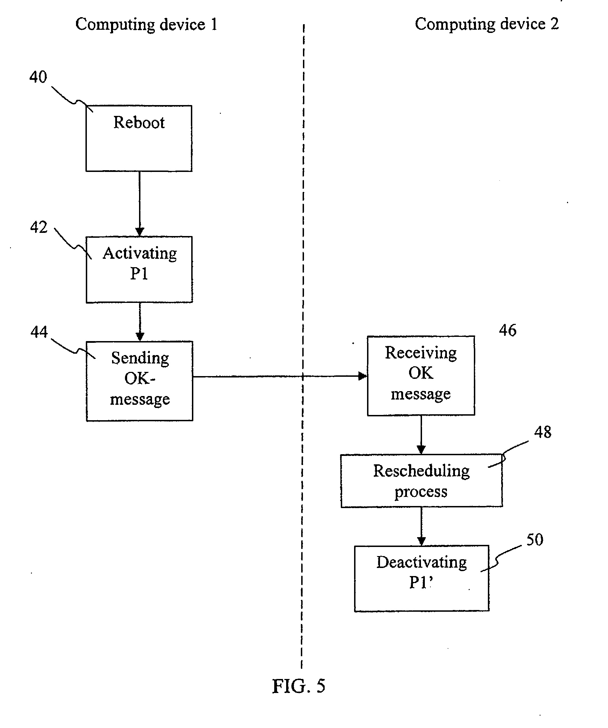

In an embodiment of the invention it is preferred that the application software program is running on the intended computing device, in the example the first computing device 1. This desired feature implies an embodiment, in which the system is able to switch back if the first application software program P1 starts working again. An embodiment of a process in accordance with this is shown in FIG. 5.

In step 40 of FIG. 5 a reboot is made. It should here be noted that the initiation of the reboot/restart may be made immediately after the failure of the first computing device or with a delay. That is, the initiation of the reboot may be preformed during or after the rescheduling process in the first computing device. As stated in step 42 the first computing device initiates the activation of the first application software P1 after the reboot is initiated. In step 44, the first computing device, as soon as it starts to execute the application again after an interruption, starts broadcasting start up running condition CD 1.P 1.Start_Up, and as soon as application P 1 is up and running in the normal state the first computing device starts broadcasting its running condition CD1.P1.Running_OK on the system bus 3.

Referring to an embodiment of FIG. 5 and table 2, the second computing device function steps are shown. In step 46 the monitoring function 5 in the second computing device 2 detects the start up condition CD1.P1. Start_Up from the first computing device on the system bus. In step 48 the second computing device 2 activates, if the second computing device 2 is running according to master schedule 2, a reschedule process of the master scheduler from master schedule 2 MS2 to the master schedule 1 MS 1 in accordance with table 2. This in turn results in that the backup application P1' is deactivated as stated in step 50.

It should here be noted that the number of reboots or restarts may be limited, for example, to 3, 10 or 30 times, in order to avoid having the computing device performing an endless loop when there is a hardware failure in the computing device.

The present invention is very well suited for networks using digital data concentrators that multiplex data streams from a number of computing units into a single data stream comprising digital data information from a number of computing devices. The monitoring function of the present invention is then used for monitoring the digital data stream.

Alternative embodiments of the invention may include a central control unit that monitors all the traffic on a data bus and switches computing device when an error is detected. The central unit may have a first master schedule and a number of alternative schedules. However, in an embodiment of the invention the central control unit only functions as a monitoring unit that activates the change of master schedule on the computing devices.

The system may comprise internal monitoring functions that determine if the application is producing erroneous data or the like. This feature may result in that the OS of the computing device determines that the first application P1 has failed. The OS may then stop broadcasting the running condition or broadcasts CD.P1.Running_NotOK, resulting in that the activation criteria in the second computing device may be receiving a CD.P1.Running_NotOK.

In an alternative embodiment a number of identical application soft-ware programs are installed on a number of computing devices, resulting in an embodiment wherein P1 is installed on computing device 1, P1' on device 2, P1" on a third device, and so on. This results in that an activation criterion in the monitoring function on the third device is that no running condition of both P1 and P1' is detected on the digital data bus. A wide spread of embodiments with different settings may be used, such as an embodiment wherein a second computing device has a number of backup application installed thereon, e.g. P1', P3', P4'.

The foregoing has described the principles, preferred embodiments and modes of operation of the present invention. However, the description should be regarded as illustrative rather than restrictive, and not as being limited to the particular embodiments discussed above. It should therefore be appreciated that variations may be made in those embodiments by those skilled in the art without departing from the scope of the present invention as defined by the following claims.

## Claims

1. An electrical system for a vehicle comprising:
- a digital information carrier (3) for digital data transfer;
- a first computing device (1) arranged to execute a first application software (P1) installed on the first computing device (1); and
- a second computing device (2) arranged to execute a second application software (P2), different from said first application software (P1), installed on the second computing device and further comprising a backup application software (P1') installed on the second computing device (2), identical to the first application software (P1), wherein the second computing device (2) is configured to initiate an execution of the installed backup application software (P1') when an error occurs in the first computing device (1) in parallel with the execution of the second application software (P2), whereby the first and second computing device comprise a partitioning operating system arranged to divide memory and CPU time among statically allocated partitions in a fixed manner so that each partition has a certain amount of memory and CPU time allocated to it, which can neither be increased nor decreased, and whereby the first application software (P1), the second application software (P2) and backup application software (P1') are arranged to be executed in separated partitions.

2. An electrical system according to any of claims 1, wherein the second computing device comprises a first master schedule (M1), wherein the first master schedule is arranged to execute the second application (P2) on the second computing device (2); and a second master schedule (M2), wherein the second master schedule is arranged to execute the second application (P2) and the backup application (P1').

3. An electrical system according to claim 2, wherein the second computing device (2) is arranged to run the first master schedule when the electrical system is running in a normal mode, i.e. when the first application software (P1) is running properly in the first computing device (1), and the second computing device is arranged to run the second master schedule when the electrical system is running in a backup mode, i.e. when the first application software (P1) has failed in the system.

4. An electrical system according to claim 3, wherein the second computing device (2) is configured to activate a reschedule process on an operating system of the second computing device (2), arranged to switch from the first master schedule (MS 1) to the second master schedule (MS2) when an error in the first computing device (1) is detected.

5. An electrical system according to claim 4, wherein the second computing device (2) is arranged with a monitoring function (5) configured to activate the rescheduling process in the second computing device (2).

6. An electrical system according to any of claims 1-5, wherein the second computing device (2) is arranged with a monitoring function (5) to monitor at least the first computing device (1).

7. An electrical system according to claim 6, wherein the first computing device continuously is sending out the running condition of the first application software (P1), and wherein the monitoring function (4) is configured to monitor data sent on the data bus (3), and when an expected running condition from the first computing device (1) is not detected on the system bus (3) the monitoring function is configured to instruct the second computing device (2) to initiate the execution of the third application software (P1').

8. An electrical system according to claim 1, wherein the electrical system is a non-critical system being non sensitive to delays.

9. A method for ensuring backup function to an electrical system in a vehicle comprising a digital information carrier (3) for digital data transfer; a first computing device (1) arranged to execute a first application software (P1); installed on the first computing device (1) and a second computing device (2) arranged to execute a second application software (P2) installed on the second computing device, different from said first application software (P1), and a third backup application software (P1'), identical to the first application software, wherein the first and second computing device comprise a partitioning operating system arranged to divide memory and CPU time among statically allocated partitions in a fixed manner so that each partition has a certain amount of memory and CPU time allocated to it, which can neither be increased nor decreased, said method comprising the steps of:
- determining that an error has occurred in the first computing device; and
- initiating an execution of the backup application in a first partition having a certain amount of memory and CPU time allocated to it in parallel while continuously executing the second application software (P2) in a second partition having a certain amount of memory and CPU time allocated to it.

10. A method according to claim 9, wherein the initiating process comprises the step of switching from a original master schedule running in the second computing device to a second master schedule.

11. A method according to any of claims 9-10, wherein the method further comprises the step of:
- monitoring the digital information carrier by using a monitoring function running on the second computing device, said monitoring function performs said determining step as well.

12. A method according to claim 11, wherein the monitoring function further monitors the running conditions of the first application software (P1) sent on the digital information from the first computing device.

13. A method according to claim 12, wherein the monitoring function further determines that an error has occurred in the first computing device when no running condition of the first application software (P1) is monitored on the digital information carrier.

14. A method according to any of the claims 9-13, wherein the method further comprises, after said initiating step, the steps of:
a. determining that the first application software is up and running on the first computing device; and
b. switching back to the original running state realising the first application into the process when it is determined that the first application software is up and running again on the first computing device.

## Patentansprüche

1. Elektrisches System für ein Fahrzeug, umfassend:
- einen Digital-Informationsträger (3) für digitale Datenübertragung;
- ein erstes Rechengerät (1), das angeordnet ist, um eine erste Anwendungs-Software (P1) auszuführen, die auf dem ersten Rechengerät (1) installiert ist; und
- ein zweites Rechengerät (2), das angeordnet ist, um eine zweite Anwendungs-Software (P2) auszuführen, die verschieden ist von der ersten Anwendungs-Software (P1), die in dem zweiten Rechengerät installiert ist, und ferner umfassend: eine Backup-Anwendungs-Software (P1'), die auf dem zweiten Rechengerät (2) installiert ist, die identisch ist zu der ersten Anwendungs-Software (P1), wobei das zweite Rechengerät (2) konfiguriert ist, um eine Ausführung der installierten Backup-Anwendungs-Software (P1) zu initiieren, wenn ein Fehler in dem ersten Rechengerät (1) auftritt, parallel zu der Ausführung der zweiten Anwendungs-Software (P2), wobei das erste und zweite Rechengerät ein Partitionierungbetriebssystem umfasst, das angeordnet ist, um Speicher und CPU-Zeit zwischen statisch allozierten Partitionen in einer festen Weise zu teilen, so dass jede Partition eine bestimmte Menge von Speicher und CPU-Zeit dazu alloziert hat, welche weder erhöht noch verringert werden kann, und wobei die erste Anwendungs-Software (P1), die zweite Anwendungs-Software (P2) und Backup-Anwendungs-Software (P1') angeordnet sind in separaten Partitionen ausgeführt zu werden.

2. Elektrisches System nach Anspruch 1, wobei das zweite Rechengerät einen ersten Haupt-Plan (M1) umfasst, wobei der erste Haupt-Plan angeordnet ist, um die zweite Anwendung (P2) auf dem zweiten Rechengerät (P2) auszuführen; und einen zweiten Haupt-Plan (M2), wobei der zweite Haupt-Plan angeordnet ist, um die zweite Anwendung (P2) und die Backup-Anwendung (P1') auszuführen.

3. Elektrisches System nach Anspruch 2, wobei das zweite Rechengerät (2) angeordnet ist, den ersten Haupt-Plan ablaufen zu lassen, wenn das elektrische System in einem normalen Modus läuft, d.h. wenn die erste Anwendungs-Software (P1) in dem ersten Rechengerät (P1) korrekt läuft, und das zweite Rechengerät angeordnet ist, den zweiten Haupt-Plan ablaufen zu lassen, wenn das elektrische System in einem Backup-Modus läuft, d.h. wenn die erste Anwendungs-Software (P1) in dem System fehlgeschlagen ist.

4. Elektrisches System nach Anspruch 3, wobei das zweite Rechengerät (2) konfiguriert ist, um einen Neu-Planungsprozess auf einem Betriebssystem des zweiten Rechengeräts (2) zu aktivieren, der angeordnet ist, um von dem ersten Haupt-Plan (MS1) zu dem zweiten Haupt-Plan (MS2) umzuschalten, wenn ein Fehler in dem ersten Rechengerät (1) erkannt wird.

5. Elektrisches System nach Anspruch 4, wobei das zweite Rechengerät (2) mit einer Überwachungsfunktion (5) angeordnet ist, die konfiguriert ist, um den Neu-Planungsprozess in dem zweiten Rechengerät (2) zu aktivieren.

6. Elektrisches System nach einem der Ansprüche 1 bis 5, wobei das zweite Kommunikationsgerät (2) mit einer Überwachungsfunktion (5) angeordnet ist, um mindestens das erste Rechengerät (1) zu überwachen.

7. Elektrisches System nach Anspruch 6, wobei das erste Rechengerät kontinuierlich den Laufzustand der ersten Anwendungs-Software (P1) aussendet, und wobei die Überwachungsfunktion (4) konfiguriert ist, um Daten, die auf dem Datenbus (3) gesendet werden, zu überwachen, und, wenn ein erwarteter Laufzustand von dem ersten Rechengerät (P1) auf dem Systembus (3) nicht erkannt wird, die Überwachungsfunktion konfiguriert ist, um das zweite Rechengerät (2) anzuweisen, die Ausführung der dritten Anwendungs-Software (P1') zu initiieren.

8. Elektrisches System nach Anspruch 1, wobei das elektrische System ein nicht-kritisches System ist, das nicht empfindlich auf Verzögerung ist.

9. Verfahren zum Sicherstellen einer Backup-Funktion zu einem elektrischen System in einem Fahrzeug, umfassend einen Digital-Informationsträger (3) für digitalen Datentransfer; ein erstes Rechengerät (1), das angeordnet ist, eine erste Anwendungs-Software (P1) auszuführen; installiert auf dem ersten Rechengerät (1) und ein zweites Rechengerät (2), das angeordnet ist, um eine zweite Anwendungs-Software (P2) auszuführen, die auf dem zweiten Rechengerät installiert ist, die verschieden ist von der ersten Anwendungs-Software (P1), und eine dritte Backup-Anwendungs-Software (P1'), die identisch ist zu der ersten Anwendungs-Software, wobei das erste und zweite Rechengerät ein Partitionierungbetriebssystem umfassen, das angeordnet ist, um Speicher und CPU-Zeit zwischen statisch allozierten Partitionen in einer festen Weise zu teilen, so dass jede Partitition eine bestimmte Menge an Speicher und CPU-Zeit dazu alloziert hat, welche weder erhöht noch verringert werden kann, das Verfahren die Schritte umfassend:
- Bestimmen, dass ein Fehler in dem ersten Rechengerät aufgetreten ist; und
- Initiieren einer Ausführung der Backup-Anwendung in einer ersten Partition, die eine bestimmte Menge von Speicher und CPU-Zeit dazu alloziert hat, parallel während der laufenden Ausführung der zweiten Anwendungs-Software (P2)in einer zweiten Partition, die eine bestimmte Menge von Speicher und CPU-Zeit dazu alloziert hat.

10. Verfahren nach Anspruch 9, wobei in Initiierungsprozess den Schritt des Schaltens von einem Original-Haupt-Plan, der in dem zweiten Rechengerät läuft, zu einem zweiten Haupt-Plan umfasst.

11. Verfahren nach einem der Ansprüche 9 bis 10, wobei das Verfahren ferner die Schritte umfasst:
- Überwachen des Digital-Informationsträgers unter Verwendung einer Überwachungsfunktion, die auf dem zweiten Rechengerät läuft, wobei die Überwachungsfunktion auch den Bestimmungsschritt durchführt.

12. Verfahren nach Anspruch 11, wobei die Überwachungsfunktion ferner den Laufzustand der ersten Anwendungs-Software (P1) überwacht, der auf der digitalen Information von dem ersten Rechengerät gesendet wird.

13. Verfahren nach Anspruch 12, wobei die Überwachungsfunktion ferner bestimmt, dass ein Fehler in dem ersten Rechengerät aufgetreten ist, wenn keine Laufinformation der ersten Anwendungs-Software (P1) auf dem digitalen Informationsträger überwacht wird.

14. Verfahren nach einem der Ansprüche 9 bis 13, wobei das Verfahren ferner, nach dem Initiierungsschritt, die Schritte umfasst:
a. Bestimmen, dass die erste Anwendungs-Software auf dem ersten Rechengerät geladen ist und läuft; und
b. Umschalten zurück zu dem ursprünglichen Laufstatus, die erste Anwendung für den Prozess freigebend, wenn bestimmt wird, dass die erste Anwendungs-Software auf dem ersten Rechengerät geladen ist und läuft.

## Revendications

1. Système électrique pour véhicule comprenant :
- un support d'informations numériques (3) pour le transfert de données numériques ;
- un premier dispositif de calcul (1) conçu pour exécuter un premier logiciel d'application (P1) installé sur le premier dispositif de calcul (1) ; et
- un deuxième dispositif de calcul (2) conçu pour exécuter un second logiciel d'application (P2), différent dudit premier logiciel d'application (P1), installé sur le deuxième dispositif de calcul et comprenant en outre un logiciel d'application de secours (P1') installé sur le deuxième dispositif de calcul (2), identique au premier logiciel d'application (P1), dans lequel le deuxième dispositif de calcul (2) est configuré pour lancer une exécution du logiciel d'application de secours installé (P1') lorsqu'une erreur se produit dans le premier dispositif de calcul (1) en parallèle avec l'exécution du second logiciel d'application (P2), moyennant quoi le premier et le deuxième dispositifs de calcul comprennent un système d'exploitation de partitionnement conçu pour diviser la mémoire et le temps UC en partitionnements alloués statiquement d'une manière fixe de sorte que chaque partitionnement ait une certaine quantité de mémoire et de temps UC qui lui est allouée, qui ne peut ni être augmentée ni diminuée, et moyennant quoi le premier logiciel d'application (P1), le second logiciel d'application (P2) et le logiciel d'application de secours (P1') sont conçus pour être exécutés dans des partitionnements séparés.

2. Système électrique selon la revendication 1, dans lequel le deuxième dispositif de calcul comprend un premier programme directeur (M1), dans lequel le premier programme directeur est conçu pour exécuter la seconde application (P2) sur le deuxième dispositif de calcul (2) ; et un second programme directeur (M2), dans lequel le second programme directeur est conçu pour exécuter la seconde application (P2) et l'application de secours (P1').

3. Système électrique selon la revendication 2, dans lequel le deuxième dispositif de calcul (2) est conçu pour exécuter le premier programme directeur lorsque le système électrique est exécuté dans un mode normal, à savoir, lorsque le premier logiciel d'application (P1) est exécuté correctement dans le premier dispositif de calcul (1), et le deuxième dispositif de calcul est conçu pour exécuter le second programme directeur lorsque le système électrique est exécuté dans un mode de secours, à savoir, lorsque le premier logiciel d'application (P1) a échoué dans le système.

4. Système électrique selon la revendication 3, dans lequel le deuxième dispositif de calcul (2) est configuré pour activer un processus de reprogrammation sur un système d'exploitation du deuxième dispositif de calcul (2), conçu pour passer du premier programme directeur (MS1) au second programme directeur (MS2) lorsqu'une erreur est détectée dans le premier dispositif de calcul (1).

5. Système électrique selon la revendication 4, dans lequel le deuxième dispositif de calcul (2) est conçu avec une fonction de surveillance (5) configurée pour activer le processus de reprogrammation dans le deuxième dispositif de calcul (2).

6. Système électrique selon l'une quelconque des revendications 1 à 5, dans lequel le deuxième dispositif de calcul (2) est conçu avec une fonction de surveillance (5) pour surveiller au moins le premier dispositif de calcul (1).

7. Système électrique selon la revendication 6, dans lequel le premier dispositif de calcul envoie en continu l'état d'exécution du premier logiciel d'application (P1), et dans lequel la fonction de surveillance (4) est configurée pour surveiller les données envoyées sur le bus de données (3), et lorsqu'une condition d'exécution attendue provenant du premier dispositif de calcul (1) n'est pas détectée sur le bus du système (3), la fonction de surveillance est configurée pour informer le deuxième dispositif de calcul (2) de lancer l'exécution du troisième logiciel d'application (P1').

8. Système électrique selon la revendication 1, dans lequel le système électrique est un système non critique étant non sensible aux retards.

9. Méthode pour assurer la fonction de secours d'un système électrique dans un véhicule comprenant un support d'informations numériques (3) pour le transfert de données numériques ; un premier dispositif de calcul (1) conçu pour exécuter un premier logiciel d'application (P1) installé sur le premier dispositif de calcul (1) et un deuxième dispositif de calcul (2) conçu pour exécuter un second logiciel d'application (P2) installé sur le deuxième dispositif de calcul, différent dudit premier logiciel d'application (P1), et un troisième logiciel d'application de secours (P1'), identique au premier logiciel d'application, dans lequel le premier et le deuxième dispositifs de calcul comprennent un système d'exploitation de partitionnement conçu pour diviser la mémoire et le temps UC en partitionnements alloués statiquement d'une manière fixe, de sorte que chaque partitionnement ait une certaine quantité de mémoire et de temps UC qui lui est allouée, qui ne peut ni être augmentée ni diminuée, ladite méthode comprenant les étapes consistant à :
- déterminer qu'une erreur s'est produite dans le premier dispositif de calcul ; et
- lancer une exécution de l'application de secours dans un premier partitionnement ayant une certaine quantité de mémoire et de temps UC qui lui est allouée en parallèle tout en exécutant en continu le second logiciel d'application (P2) dans un second partitionnement ayant une certaine quantité de mémoire et de temps UC qui lui est allouée.

10. Méthode selon la revendication 9, dans laquelle le procédé de lancement comprend l'étape de passage d'un programme directeur d'origine exécuté dans le deuxième dispositif de calcul à un second programme directeur.

11. Méthode selon l'une quelconque des revendications 9 et 10, la méthode comprenant en outre l'étape consistant à :
- surveiller le support d'informations numériques en utilisant une fonction de surveillance exécutée sur le deuxième dispositif de calcul, ladite fonction de surveillance effectuant également ladite étape de détermination.

12. Méthode selon la revendication 11, dans laquelle la fonction de surveillance surveille en outre les conditions d'exécution du premier logiciel d'application (P1) envoyées sur les informations numériques en provenance du premier dispositif de calcul.

13. Méthode selon la revendication 12, dans laquelle la fonction de surveillance détermine en outre qu'une erreur s'est produite dans le premier dispositif de calcul lorsqu'aucune condition d'exécution du premier logiciel d'application (P1) n'est surveillée sur le support d'informations numériques.

14. Méthode selon l'une quelconque des revendications 9 à 13, la méthode comprenant en outre, après ladite étape de lancement, les étapes consistant à :
a. déterminer que le premier logiciel d'application est disponible et exécuté sur le premier logiciel de calcul ; et
b. revenir à l'état d'exécution d'origine réalisant la première application dans le processus lorsqu'il est déterminé que le premier logiciel d'application est disponible et exécuté à nouveau sur le premier dispositif de calcul.
